# EUROPÄISCHE PATENTSCHRIFT

(11) **EP 3 393 842 B1**
(45) Veröffentlichungstag und Bekanntmachung des Hinweises auf die Patenterteilung: **09.02.2022**
(21) Anmeldenummer: 16816691.6
(22) Anmeldetag: 20.12.2016
(51) Int. Cl.: B60K 37/06

(54) **VERFAHREN UND SYSTEM ZUM BEREITSTELLEN EINER BENUTZERSCHNITTSTELLE FÜR ZUMINDEST EINE EINRICHTUNG EINES FAHRZEUGS**
METHOD AND SYSTEM FOR PROVIDING A USER INTERFACE FOR AT LEAST ONE DEVICE OF A VEHICLE
PROCÉDÉ ET SYSTÈME DE FOURNITURE D'UNE INTERFACE UTILISATEUR POUR AU MOINS UN DISPOSITIF D'UN VÉHICULE

(30) Priorität: 22.12.2015 DE 102015122601
(43) Veröffentlichungstag der Anmeldung: 31.10.2018
(73) Patentinhaber: Volkswagen Aktiengesellschaft, 38440 Wolfsburg (DE)
(72) Erfinder: KASSNER, Astrid, 10117 Berlin (DE); KLAAS, Michael, 38179 Schwülper (DE)
(74) Vertreter: Reitstötter Kinzebach
(86) Internationale Anmeldenummer: PCT/EP2016/082024
(87) Internationale Veröffentlichungsnummer: WO 2017/108856

(56) Entgegenhaltungen:
- WO-A1-2015/049837
- DE-A1-102008 037 977
- DE-A1-102012 010 044

## Beschreibung

Verfahren und System zum Bereitstellen einer Benutzerschnittstelle für zumindest eine Einrichtung eines Fahrzeugs

Die vorliegende Erfindung betrifft ein Verfahren und ein System zum Bereitstellen einer Benutzerschnittstelle für zumindest eine Einrichtung eines Fahrzeugs.

In modernen Fahrzeugen ist eine Vielzahl von Einrichtungen vorgesehen, die durch elektrische Schalter oder elektronische Bedienvorrichtungen betätigt, eingestellt und/oder bedient werden können. Um einem Nutzer diese Bedienung zu erlauben, können beispielsweise mechanische Schalter und Regler vorgesehen sein sowie Bedienvorrichtungen, die verschiedene Funktionen ausführen können, etwa mit einem Touchscreen und einer graphischen Bedienoberfläche.

Es ist dabei besonders in Fahrzeugen von großer Bedeutung, dass ein Nutzer, insbesondere der Fahrer des Fahrzeugs, die Bedienung schnell und einfach vornehmen kann, ohne unnötig viel Aufmerksamkeit vom Verkehrsgeschehen abzuwenden. Aus diesem Grund werden vermehrt Systeme zur Gestensteuerung verwendet. Typischerweise können dabei Gesten in einem Bereich vor einer Anzeigefläche mit einer graphischen Bedienoberfläche ausgeführt werden, wobei eine Rückmeldung auf der Anzeigefläche ausgegeben werden kann. Das Dokument WO2015/049837 A1 offenbart ein solches Verfahren bzw. System.

Es ist die Aufgabe der vorliegenden Erfindung, ein Verfahren und ein System zur Verfügung zu stellen, die dem Nutzer eine besonders intuitive und einfache Bedienung von Einrichtungen des Fahrzeugs mithilfe von Gesten ermöglichen.

Erfindungsgemäß wird diese Aufgabe durch ein Verfahren mit den Merkmalen des Anspruchs 1 und ein System mit den Merkmalen des Anspruchs 12 gelöst. Vorteilhafte Ausgestaltungen und Weiterbildungen ergeben sich aus den abhängigen Ansprüchen.

Bei dem erfindungsgemäßen Verfahren der eingangs genannten Art wird zunächst eine Erkundungsgeste eines Nutzers erfasst, wobei der Erkundungsgeste eine Erkundungsrichtung zugeordnet wird und anhand der Erkundungsrichtung ein Annäherungswert für die Einrichtung bestimmt wird. Anhand des Annäherungswertes wird ein Rückmeldungssignal erzeugt und ausgegeben. Wenn der Annäherungswert einen bestimmten Schwellenwert übersteigt, wird die Einrichtung ausgewählt. Es wird eine Bedienmöglichkeitenanzeige für die ausgewählte Einrichtung erzeugt und ausgegeben, wobei die Bedienmöglichkeitenanzeige Informationen über Bedienmöglichkeiten für die ausgewählte Einrichtung umfasst. Anschließend wird eine Bediengeste des Nutzers erfasst und anhand der erfassten Bediengeste wird ein Steuersignal für die ausgewählte Einrichtung erzeugt und an die Einrichtung übertragen.

Der Nutzer kann dadurch vorteilhafterweise einfach und intuitiv die zumindest eine Einrichtung des Fahrzeugs mit Gesten bedienen. Zur Durchführung einer Geste wird erfindungsgemäß ein Betätigungsobjekt verwendet, insbesondere die Hand des Nutzers. In den folgenden Erläuterungen ist die Hand des Benutzers das Betätigungsobjekt, die Angaben sind allerdings auf andere Betätigungsobjekte, etwa einen Stift, zu verallgemeinern.

Unter einer "Geste" wird im Sinne der Erfindung eine bestimmte Stellung der Hand eines Nutzers oder eine bestimmte Bewegung, die mit der Hand des Nutzers ausgeführt wird, verstanden. Die Gesten können nach an sich bekannter Art ausgestaltet sein. Sie umfassen insbesondere Zeigegesten, Wischgesten und solche Gesten, die im alltäglichen Gebrauch verwendet werden, zum Beispiel Handdrehungen, Greifgesten und Kombinationen mehrerer solcher gegebenenfalls unmittelbar kurz nacheinander ausgeführter Gesten. Die Gesten werden in einem Erfassungsraum ausgeführt, ohne dass der Nutzer einen räumlichen Bezug zu einer bestimmten Einrichtung herstellen muss. Es ist insbesondere nicht erforderlich, sich etwa einem bestimmten Objekt zu nähern oder es zu berühren. Durch die Steuerung mittels Gesten wird dem Nutzer eine besonders einfache und intuitive Eingabemöglichkeit zur Steuerung der Einrichtung bereitgestellt.

Die Bewegungsrichtung der Geste steht insbesondere in Verbindung mit einer Bewegungsrichtung oder einer Funktion, die der Geste zugeordnet ist. Die Bewegungsrichtung kann insbesondere direkt mit einer mechanischen Funktion der Einrichtung gekoppelt sein. Die Einrichtung kann nämlich ein anhand der Geste bewegbares Element umfassen. In diesem Fall wird anhand des Steuersignals eine Bewegung des Elements ausgeführt. Bei dem Element kann es sich beispielsweise um einen Aktuator handeln. Ein solches Element kann etwa durch eine Bewegung einer Geste betätigt werden, die einem Schieben oder Drehen eines Bedienelements entspricht, wobei die entsprechende Bewegung berührungslos im Erfassungsraum vom Nutzer ausgeführt wird. Eine derartige Betätigung eines Elements bietet den Vorteil, dass der Nutzer nicht eine Bedieneinrichtung oder - wie beispielsweise bei einer berührungsempfindlichen Oberfläche - einen bestimmten Flächenbereich treffen muss. Es reicht vielmehr aus, dass er seine Hand in den Erfassungsraum bewegt, über die Erkundungsgeste eine Zuordnung zu der Einrichtung, welche das Element umfasst, herstellt und dann die der Funktion des Elements zugeordnete Geste ausführt. Die Geste entspricht dabei insbesondere einer Bewegung, die beispielsweise bei mechanischen Elementen ausgeführt wird, sodass sich der Nutzer diese Gesten sehr leicht merken kann.

Insbesondere werden die Gesten berührungslos im Raum erfasst, etwa durch ein Kamerasystem, welches zeitlich aufgelöste Videodaten aus dem Erfassungsraum aufnimmt und mittels einer Analyseeinheit die erfassten Nutzerbewegungen bestimmten Gesten zuordnet. Alternativ oder zusätzlich umfasst die Gestenerfassungseinrichtung resistive und/oder kapazitive Flächen, über welche eine Geste erfassbar ist. Für den Fall, dass die Geste in mehrere Phasen unterteilt ist, wird wenigstens eine Phase berührungslos im Raum erfasst. Berührungslose Gesten haben insbesondere den Vorteil, dass der Nutzer für seine Bedieneingaben keine Bedienmittel in die Hand nehmen muss. Dies ist insbesondere vorteilhaft bei der Verwendung des erfindungsgemäßen Verfahrens in einem Fahrzeug.

Bei dem erfindungsgemäßen Verfahren wird zunächst eine Erkundungsgeste erfasst, um die mit Gesten bedienbare Einrichtung zu lokalisieren und auszuwählen. Beispielsweise kann der Nutzer auf eine bestimmte Einrichtung des Fahrzeugs zeigen und es kann bestimmt werden, wie genau der Nutzer durch die Erkundungsgeste die Einrichtung bestimmt. Dabei kann insbesondere aus der erfassten Geste eine Richtung im Raum ermittelt werden. In Abhängigkeit von der ermittelten Richtung kann eine Gerade im Raum berechnet werden und es können zum Beispiel Elemente bestimmt werden, die in einem vorbestimmten Umgebungsbereich um die berechnete Gerade angeordnet sind. Dies kann das Auswahlverfahren weiter beschleunigen.

Insbesondere kann die Einrichtung an einem bestimmten Ort im Fahrzeug angeordnet beziehungsweise diesem Ort zugeordnet sein. Dies kann etwa die tatsächliche Position einer Einrichtung sein, etwa die Position einer Tür, eines Lautsprechers oder einer Beleuchtungseinrichtung, es kann jedoch auch ein Ort im Fahrzeug unabhängig von der tatsächlichen Anordnung physischer Elemente einer Funktion oder Einrichtung zugeordnet werden, beispielsweise kann zur Bedienung einer Klimaanlage ein Ort definiert sein, der nicht einer tatsächlichen Anordnung physischer Elemente der Klimaanlage entspricht.

Für die Einrichtung wird anhand der Erkundungsrichtung der Erkundungsgeste ein Annäherungswert bestimmt. Dieser quantifiziert insbesondere, wie genau der Nutzer auf die Einrichtung beziehungsweise den der Einrichtung zugeordneten Ort zeigt. Anhand des Annäherungswerts wird ein Rückmeldesignal ausgegeben, beispielsweise kann eine Lichtquelle in der Umgebung der Einrichtung angeordnet sein, deren Intensität mit steigendem Annäherungswert erhöht wird. Beispielsweise können Elemente einer Ambientebeleuchtung des Fahrzeugs in unmittelbarer Nähe einer Tür oder eines Lautsprechers des Fahrzeugs angeordnet sein und umso heller leuchten, je genauer der Nutzer in ihre Richtung zeigt. Neben der Helligkeit können alternativ oder zusätzlich auch andere Parameter der Beleuchtung verändert werden, beispielsweise die Farbe oder ein Parameter eines dynamischen Effekts, etwa eine Blinkfrequenz. Ferner kann ein akustisch wahrnehmbares oder tastbares Rückmeldesignal ausgegeben werden.

Übersteigt der Annäherungswert einen Schwellenwert, beispielsweise weil der Nutzermit hoher Genauigkeit auf eine Einrichtung des Fahrzeugs zeigt, so wird die Einrichtung ausgewählt. Der Nutzer kann nun eine Bediengeste ausführen, um die Einrichtung zu bedienen. Dabei wird der Nutzer unterstützt durch eine Bedienmöglichkeitenanzeige: Diese symbolisiert eine oder mehrere der möglichen Bediengesten, die der Nutzer zur Bedienung der Einrichtung verwenden kann. Beispielsweise kann die Anzeige eine bestimmte Richtung darstellen, etwa durch ein Symbol oder einen dynamischen Lichteffekt in diese Richtung. Dies kann durch den Nutzer so interpretiert werden, dass eine Bewegung in diese Richtung als Geste interpretiert wird. Beispielsweise kann nach dem Auswählen einer geschlossenen Schiebetür eine Richtung angezeigt werden, die im Wesentlichen der Öffnungsrichtung der Tür entspricht. In diesem beispielhaften Fall kann der Nutzer eine Bewegung in eben diese Richtung ausführen und damit ein Öffnen der Tür bewirken. In einem weiteren Beispiel kann die Bedienmöglichkeitenanzeige für einen Lautsprecher zwei zueinander entgegengesetzte Richtungen anzeigen, wobei eine entsprechende Bewegung als Geste zum Absenken oder Erhöhen der Lautstärke interpretiert wird.

Zur Anzeige der Bedienmöglichkeitenanzeige können verschiedene an sich bekannte Verfahren genutzt werden, beispielsweise eine Anzeige eines Symbols, einer Textnachricht, eines Lichteffekts, insbesondere durch Veränderung oder Wahl eines Parameters der Beleuchtung, beispielsweise Farbe, Intensität und dynamischen Parametern, wie etwa einer Blinkfrequenz. Auch hier kann ferner ein akustisch wahrnehmbares oder tastbares Rückmeldesignal ausgegeben werden.

Schließlich wird eine Bediengeste des Nutzers erfasst und ein entsprechendes Steuersignal erzeugt. Das Steuersignal bewirkt eine Ausführung einer Funktion der ausgewählten Einrichtung.

Bei der Erfindung wird das Rückmeldesignal und/oder die Bedienmöglichkeitenanzeige so ausgegeben, dass ein räumlicher Bezug zu der Einrichtung hergestellt wird. Dadurch kann der Nutzer vorteilhafterweise erkennen, auf welche Einrichtung sich das Rückmeldungssignal beziehungsweise die Bedienmöglichkeitenanzeige bezieht.

Beispielsweise kann die Anzeige in der direkten Umgebung der Einrichtung erfolgen, beispielsweise durch auf der Oberfläche der Einrichtung oder in ihrer direkten räumlichen Umgebung angeordnete Ausgabeelemente, beispielsweise eine Leuchtanzeige und/oder eine andere Beleuchtungseinrichtung. Ferner kann eine Richtung ausgewiesen werden, beispielsweise durch eine Pfeilform und/oder einen dynamischen Effekt, etwa ein auf die Einrichtung zulaufendes Lauflicht, bei dem nacheinander nebeneinander liegende Beleuchtungselemente aktiviert und deaktiviert werden.

Bei einer weiteren Ausbildung umfasst das Rückmeldungssignal eine Lichtverteilung, insbesondere ein Lauflicht. Dadurch kann vorteilhafterweise eine leicht erkennbare Ausgabe für den Nutzer erfolgen.

Erfindungsgemäß wird unter einem Lauflicht ein dynamischer Lichteffekt verstanden, bei dem ein Beleuchtungsparameter verändert wird, wobei der Beleuchtungsparameter entlang einer Erstreckungsrichtung einer länglichen Beleuchtungseinrichtung in fortlaufender Weise verändert wird, wobei der Eindruck eines sich entlang einer Richtung fortbewegenden Lichteffekts entsteht. Insbesondere kann dadurch eine Richtung dargestellt werden. Beispielsweise können entlang einer Längsrichtung angeordnete Leuchtelemente nacheinander aktiviert und nach einer definierten Zeit wieder deaktiviert werden. Durch einen Zeitversatz zwischen nebeneinander angeordneten Leuchtelementen entsteht der Eindruck einer Bewegung, beispielsweise in eine Richtung entlang einer Längserstreckung der Beleuchtungseinrichtung, entlang derer die Leuchtelemente angeordnet sind, und es kann ferner durch die Wahl eines Ausgangspunktes beispielsweise in der Mitte der Beleuchtungsvorrichtung der Lauflichteffekt in entgegengesetzte Richtungen ausgeführt werden. Ferner können durch eine Kombination mehrerer Lauflichteffekte mehrere Richtungen dargestellt werden.

Bei einer Weiterbildung des erfindungsgemäßen Verfahrens umfasst die Lichtverteilung des Rückmeldesignals einen Lichtparameter, insbesondere eine Farbe, eine Intensität und/oder eine dynamische Änderung, wobei der Lichtparameter in Abhängigkeit von dem Annäherungswert gebildet wird. Dadurch kann vorteilhafterweise ein besonders leicht erfassbares Rückmeldungssignal erzeugt werden.

Beispielsweise kann die Helligkeit einer Ambientebeleuchtung des Fahrzeugs im Bereich einer Einrichtung so gesteuert werden, dass sie sich umso stärker verändert, je genauer die Erkundungsrichtung in Richtung der Einrichtung weist. Beispielsweise kann die Beleuchtung heller werden, wenn der Annäherungswert steigt, das heißt, wenn der Nutzer genauer in die Richtung der Einrichtung zeigt. Ferner kann sich eine Farbe der Beleuchtung verändern oder es kann ein dynamischer Effekt erzeugt werden, der auf die Einrichtung hinweist. Der Nutzer kann dadurch die Erkundungsgeste und insbesondere die Erkundungsrichtung so verändern, dass der Annäherungswert einem Maximalwert beziehungsweise dem Schwellenwert zum Auswählen der Einrichtung näher kommt.

Bei einer Ausbildung umfasst die Bedienmöglichkeitenanzeige eine dynamische Lichtverteilung, insbesondere ein Lauflicht, und durch die dynamische Lichtverteilung wird zumindest eine Raumrichtung dargestellt. Der Nutzer kann dadurch vorteilhafterweise erkennen, wenn eine potenzielle Bediengeste eine bestimmte Richtung aufweisen soll. Beispielsweise kann ein Lauflicht in die Richtung angezeigt werden, in die eine Bediengeste ausgeführt werden kann.

Bei einer weiteren Ausbildung umfasst die Bedienmöglichkeitenanzeige ein Graphikelement. Dadurch kann vorteilhafterweise eine graphische Darstellung genutzt werden, um Bedienmöglichkeiten auszugeben. Beispielsweise kann durch eine Anzeigefläche ein Symbol oder eine graphische Darstellung ausgegeben werden, wobei insbesondere komplexe Bedienmöglichkeiten und Bediengesten dargestellt werden können.

Bei einer Weiterbildung wird durch die ausgewählte Einrichtung anhand des Steuersignals eine Funktion ausgeführt, wobei während des Ausführens der Funktion ein Funktionsrückmeldungssignal erzeugt und ausgegeben wird. Der Nutzer kann dadurch vorteilhafterweise erkennen, wann und ob die Einrichtung die gewünschte Funktion ausführt.

Beispielsweise kann das Funktionsrückmeldungssignal durch eine Lichtverteilung angezeigt werden, beispielsweise durch eine Ambientebeleuchtung des Fahrzeugs. Insbesondere kann ein dynamischer Lichteffekt erzeugt werden, der insbesondere für den Zeitraum der Ausführung der Funktion andauern kann. Beispielsweise kann das Funktionsrückmeldungssignal angezeigt werden, während ein Parameter schrittweise verstellt wird, zum Beispiel beim stufenweisen Einstellen einer Lautstärke, oder während eine mechanische Funktion, beispielsweise das Öffnen einer Tür, ausgeführt wird.

Bei einer weiteren Ausbildung wird ein Aktivierungssignal empfangen und anhand des Aktivierungssignals wird eine Gestenbedienung einer Einrichtung aktiviert. Dadurch kann vorteilhafterweise die Gestenbedienung gezielt aktiviert werden, um etwa eine versehentliche Fehlbedienung zu vermeiden. Insbesondere kann das Aktivierungssignal eine Geste sein. Beispielsweise kann der Nutzer eine Aktivierungsgeste ausführen, wodurch die Gestenbedienung der Einrichtung aktiviert wird und im Folgenden die Bedienung der Einrichtung gemäß dem erfindungsgemäßen Verfahren ermöglicht wird. Das Aktivierungssignal kann ferner durch eine Betätigung eines Bedienelements erfasst werden oder mittels einer Sprachsteuerung.

Bei einer Weiterbildung wird die Erkundungsgeste und/oder die Bediengeste des Nutzers in einem Erfassungsraum erfasst, wobei der Erfassungsraum die unmittelbare Umgebung des Nutzers auf einem Fahrzeugsitz des Fahrzeugs umfasst. Dadurch können die Gesten vorteilhafterweise dort ausgeführt werden, wo der Nutzer sitzt.

Während bei herkömmlichen Verfahren zur Gestenbedienung typischerweise Gesten in unmittelbarer Nähe beziehungsweise in unmittelbarem räumlichem Zusammenhang mit den bedienten Einrichtungen ausgeführt werden müssen, können erfindungsgemäß auch Einrichtungen bedient werden, die sich weit vom Nutzer entfernt befinden. Beispielsweise betrifft dies die Steuerung einer Schiebetür, einer Kofferraumklappe, einer Klimaanlage, eines Bildschirms des Fahrzeugs, beispielsweise im Fond des Fahrzeugs, oder einer Ausgabevorrichtung, etwa eines Lautsprechers. Beispielsweise kann der Nutzer eine Geste in dem Erfassungsraum ausführen, das heißt in der Umgebung seines Fahrzeugsitzes, und damit an einer weit entfernten Position im Fahrzeug angeordnete Einrichtungen bedienen.

Bei einer Weiterbildung wird durch das Steuersignal eine Fahrzeugtür betätigt oder eine Klimaanlage eines Fahrzeugs eingestellt. Dadurch werden vorteilhafterweise zentrale Einrichtungen des Fahrzeugs durch Gesten gesteuert. Bei einer weiteren Ausbildung umfasst die Einrichtung eine Audiowiedergabeeinrichtung und die Bedienmöglichkeiten umfassen Bediengesten, die entgegengesetzte Richtungen aufweisen, wobei insbesondere eine Lautstärke der Audiowiedergabeeinrichtung durch das erzeugte Steuersignal gesteuert wird. Insbesondere kann ein Lautsprecher eingestellt werden. Die Gestensteuerung kann ferner zum Einstellung anderer Parameter und weiterer Einrichtungen des Fahrzeugs verwendet werden.

Bei einer Weiterbildung weist die Bediengeste eine Geschwindigkeit auf und das Steuersignal wird in Abhängigkeit von der Geschwindigkeit der Bediengeste erzeugt. Dadurch kann vorteilhafterweise eine differenzierte Steuerung durch die Bediengeste ermöglicht werden. Beispielsweise kann ein Einstellungsparameter umso stärker verändert werden, je schneller die entsprechende Bediengeste ausgeführt wird.

Das erfindungsgemäße System der eingangs genannten Art umfasst eine Gestenerfassungseinheit, durch die eine Erkundungsgeste eines Nutzers erfassbar ist, wobei der Erkundungsgeste eine Erkundungsrichtung zuordenbar ist und anhand der Erkundungsrichtung ein Annäherungswert für die Einrichtung bestimmbar ist. Es umfasst ferner eine Steuereinheit, durch die anhand des Annäherungswertes ein Rückmeldungssignal erzeugbar ist, sowie eine Ausgabeeinheit, durch die das Rückmeldesignal ausgebbar ist. Dabei ist, wenn der Annäherungswert einen bestimmten Schwellenwert übersteigt, durch die Steuereinheit die Einrichtung auswählbar und eine Bedienmöglichkeitenanzeige für die ausgewählte Einrichtung erzeugbar und durch die Ausgabeeinheit ausgebbar. Dabei umfasst die Bedienmöglichkeitenanzeige Informationen über Bedienmöglichkeiten für die ausgewählte Einrichtung, wobei durch die Gestenerfassungseinheit ferner eine Bediengeste des Nutzers erfassbar ist und durch die Steuereinheit anhand der erfassten Bediengeste ein Steuersignal für die ausgewählte Einrichtung erzeugbar und an die Einrichtung übertragbar ist.

Das erfindungsgemäße System ist insbesondere ausgebildet, das vorstehend beschriebene erfindungsgemäße Verfahren zu implementieren. Das System weist somit dieselben Vorteile auf wie das erfindungsgemäße Verfahren.

Bei einer Ausbildung des erfindungsgemäßen Systems umfasst die Ausgabeeinheit zumindest eine längliche Beleuchtungseinrichtung, die sich von einer ersten Position zu einer zweiten Position erstreckt. Das Rückmeldungssignal und/oder die Bedienmöglichkeitenanzeige umfasst einen dynamischen Lichteffekt, der dadurch erzeugbar ist, dass ein Beleuchtungsparameter entlang der länglichen Beleuchtungseinrichtung ausgehend von der ersten Position hin zu der zweiten Position verändert wird. Dadurch kann vorteilhafterweise eine schnell und intuitiv erfassbare dynamische Ausgabe erzeugt werden. Insbesondere kann dabei ein Lauflichteffekt ausgegeben werden.

Bei einer Weiterbildung umfasst die längliche Beleuchtungseinrichtung mehrere benachbart zueinander angeordnete Lichtquellen, wobei durch die Lichtquellen zum Ausgeben des Rückmeldungssignals und/oder der Bedienmöglichkeitenanzeige Licht emittierbar ist, wobei der dynamische Lichteffekt dadurch erzeugbar ist, dass der Lichtparameter des von den Lichtquellen emittierten Lichts von einzelnen benachbart zueinander angeordneten Lichtquellen oder von Gruppen von Lichtquellen, die benachbart zueinander angeordnet sind, nacheinander veränderbar ist.

Durch diese Ausgestaltung des erfindungsgemäßen Verfahrens kann der Beleuchtungsparameter besonders einfach verändert werden und es wird insbesondere die Erzeugung eines Lauflichts erleichtert, wobei mehrere Lichtquellen nacheinander und in einer koordinierten Weise angesteuert werden. Insbesondere können die Lichtquellen unabhängig voneinander angesteuert werden, sodass beliebige Beleuchtungsmuster erzeugt werden können. Es kann dabei statt einer bloßen Veränderung des Beleuchtungsparameters auch eine Lichtchoreographie erzeugt werden, bei welcher die Lichtparameter der unterschiedlichen Lichtquellen in einer bestimmten Abfolge verändert werden. Die Lichtquelle können insbesondere Leuchtdioden sein. Weiterhin können die Leuchtdioden dabei nebeneinander oder untereinander angeordnet sein. Alternativ können die Leuchtdioden auch in einer Matrix angeordnet sein, sodass die Beleuchtungseinrichtung durch eine LED-Matrix bereitgestellt wird. Auch bei der Verwendung einer LED-Matrix kann eine Lichtchoreographie erzeugt werden. Dabei können beispielsweise erzeugte Lichtmuster in einer bestimmten Abfolge verändert werden.

Bei einer Weiterbildung umfasst die Einrichtung eine Schiebetür, eine Klimaanlage, einen Bildschirm oder eine Audiowiedergabeeinrichtung des Fahrzeugs. Dadurch können vorteilhafterweise zentrale Einrichtungen des Fahrzeugs durch Gesten bedient werden.

Die Erfindung wird nun anhand von Ausführungsbeispielen mit Bezug zu den Zeichnungen erläutert.
Figur 1 zeigt ein Ausführungsbeispiel des erfindungsgemäßen Systems und
Figuren 2A und 2B zeigen ein Ausführungsbeispiel einer Ausgabeeinheit für das erfindungsgemäße System.

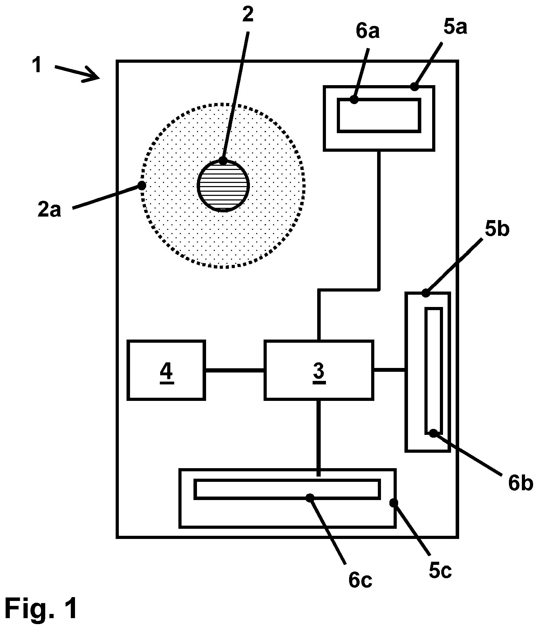

Mit Bezug zu Figur 1 wird ein Ausführungsbeispiel des erfindungsgemäßen Systems erläutert.

Ein Nutzer 2 befindet sich in einem Fahrzeug 1. In dem dargestellten Ausführungsbeispiel ist der Nutzer 2 ein Fahrer 2 des Fahrzeugs 1 und befindet sich links vorne im Fahrzeug 1 auf einem Fahrzeugsitz. Ein Bereich um den Fahrer 2 herum ist als Erfassungsraum 2a angedeutet. Im dargestellten Fall erstreckt sich der Erfassungsraum 2a kreisförmig um den Fahrer 2 herum, er kann allerdings in anderen Ausführungsbeispielen einen beliebigen Raum einnehmen.

Das Fahrzeug 1 umfasst eine Steuereinheit 3, die mit einer Gestenerfassungseinheit 4 sowie mit Einrichtungen 5a, 5b, 5c des Fahrzeugs 1 gekoppelt ist. Dabei sind die Einrichtungen des Fahrzeugs ein Lautsprecher 5a, eine Schiebetür 5b und eine Kofferraumklappe 5c. Die Einrichtungen 5a, 5b, 5c des Fahrzeugs 1 umfassen jeweils eine Ausgabeeinheit 6a, 6b, 6c, die in dem dargestellten Ausführungsbeispiel als Beleuchtungseinrichtungen 6a, 6b, 6c ausgeführt ist. Die Beleuchtungseinrichtungen 6a, 6b, 6c sind jeweils in der direkten räumlichen Umgebung der Einrichtungen 5a, 5b, 5c des Fahrzeugs 1 angeordnet, insbesondere an einem oberen Rand der jeweiligen Einrichtung 5a, 5b, 5c. Beispielsweise verläuft die Beleuchtungseinrichtung 6b am oberen Rand der Schiebetür 5b. Die Anordnung und Ausführung der Ausgabeeinheiten 6a, 6b, 6c kann in weiteren Ausführungsbeispielen auf verschiedene Weise ausgeführt sein und an die Gegebenheiten des Systems angepasst sein.

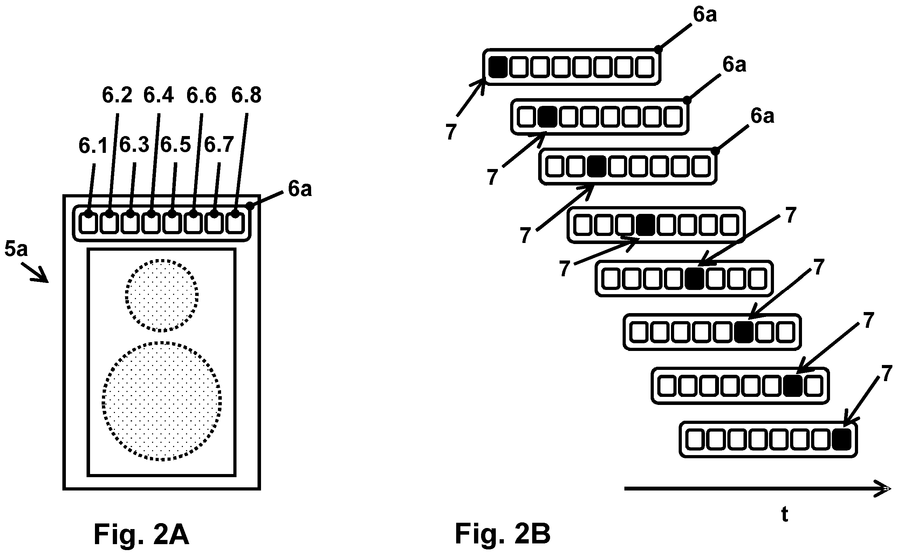

Mit Bezug zu den Figuren 2A und 2B wird ein Ausführungsbeispiel einer Ausgabeeinheit des erfindungsgemäßen Systems erläutert. Dabei wird insbesondere von dem oben mit Bezug zu Figur 1 erläuterten Ausführungsbeispiel des erfindungsgemäßen Systems ausgegangen.

Der in Figur 2A dargestellte Lautsprecher 5a umfasst die Beleuchtungseinrichtung 6a. Die Beleuchtungseinrichtung 6a wiederum umfasst Lichtquellen 6.1 bis 6.8, die am oberen Rand des Lautsprechers 5a nebeneinander angeordnet sind. Die einzelnen Lichtquellen 6.1 bis 6.8 können einzeln angesteuert werden.

Beispielsweise kann, wie in Figur 2B dargestellt, ein Lauflichteffekt durch die Beleuchtungseinrichtung 6a ausgegeben werden. Figur 2B zeigt den Zustand der Beleuchtungseinrichtung 6a zu verschiedenen Zeitpunkten, wobei die Beleuchtungseinrichtung 6a in den jeweiligen Zuständen von oben nach unten aufeinander folgend dargestellt ist, wobei durch die Verschiebung entlang der Zeitachse t die zeitliche Veränderung dargestellt wird. Zur Erzeugung des Lauflichteffekts wird zumindest ein Beleuchtungsparameter der Lichtquellen 6.1 bis 6.8 verändert, wobei die Veränderung nacheinander für nebeneinander angeordnete Lichtquellen 6.1 bis 6.8 verändert wird. In dem dargestellten Beispiel betrifft der Beleuchtungsparameter eine Lichtintensität beziehungsweise ein Ein- und Ausschalten einzelner Lichtquellen 6.1 bis 6.8. Es leuchtet zu jedem Zeitpunkt jeweils eine leuchtende Lichtquelle 7, die Lichtquellen 6.1 bis 6.8 leuchten also nacheinander auf. In dem dargestellten Beispiel wird dadurch eine Richtung nach rechts signalisiert.

Der veränderte Beleuchtungsparametern kann bei anderen Ausführungsbeispielen alternativ oder zusätzlich eine Farbe, eine Intensität und/oder einen dynamischen Parameter, beispielsweise eine Blinkfrequenz, betreffen. Der Lauflichteffekt kann ferner in verschiedene Richtungen, gegebenenfalls auch durch Kombination mehrerer Lauflichteffekte in verschiedene Richtungen, realisiert werden.

Mit Bezug zu den Figuren 1, 2A und 2B wird ein Ausführungsbeispiel des erfindungsgemäßen Verfahrens erläutert. Dabei wird von dem oben mit Bezug zu den Figuren 1, 2A und 2B erläuterten erfindungsgemäßen System ausgegangen.

In einem ersten Schritt führt der Nutzer 2 in dem Erfassungsraum 2a eine Erkundungsgeste aus. In dem dargestellten Ausführungsbeispiel ist dies eine Zeigegeste, bei welcher der Nutzer mit der Hand in eine bestimmte Richtung zeigt. Die Erkundungsgeste wird durch die Gestenerfassungseinheit 4 des Fahrzeugs 1 erfasst und es wird die Erkundungsrichtung der Erkundungsgeste ermittelt. Für die Einrichtungen 5a, 5b, 5c des Fahrzeugs 1 wird jeweils ein Annäherungswert für die Erkundungsgeste bestimmt. Der Annäherungswert quantifiziert, wie die Erkundungsrichtung mit der jeweiligen Einrichtung 5a, 5b, 5c korreliert ist, das heißt, es wird beispielsweise eine Wahrscheinlichkeit bestimmt, mit der die Erkundungsgeste jeweils den Einrichtungen 5a, 5b, 5c des Fahrzeugs 1 räumlich zugeordnet werden kann. Insbesondere ist der Annäherungswert umso höher, je genauer die Erkundungsrichtung vom Fahrer 2 aus auf eine Einrichtung 5a, 5b, 5c gerichtet ist. Der Annäherungswert erreicht insbesondere ein Maximum, wenn der Fahrer 2 die Erkundungsgeste so ausführt, dass die Erkundungsrichtung exakt auf eine der Einrichtungen 5a, 5b, 5c gerichtet ist.

Für die Einrichtungen 5a, 5b, 5c des Fahrzeugs 1 werden anhand der jeweiligen Annäherungswerte für die Erkundungsgeste Rückmeldungssignale erzeugt und ausgegeben. Die Ausgabe erfolgt dabei durch die Beleuchtungseinrichtungen 6a, 6b, 6c der Einrichtungen 5a, 5b, 5c, im dargestellten Ausführungsbeispiel am Rand der Einrichtungen 5a, 5b, 5c angeordnete längliche Reihen einzelner Lichtquellen 6.1 bis 6.8. Je höher der Annäherungswert für eine Einrichtung 5a, 5b, 5c ist, desto heller leuchten die Lichtquellen 6.1 bis 6.8 der der jeweiligen Einrichtung 5a, 5b, 5c zugeordneten Beleuchtungseinrichtung 6a, 6b, 6c.

Dabei ist insbesondere ein weiterer Schwellenwert definiert, wobei, wenn der Annäherungswert für eine Einrichtung 5a, 5b, 5c den weiteren Schwellenwert nicht erreicht, für diese Einrichtung 5a, 5b, 5c kein Rückmeldungssignal ausgegeben wird. Dadurch kann vermieden werden, dass eine verwirrend große Anzahl von Einrichtungen 5a, 5b, 5c auf eine Erkundungsgeste reagiert, obwohl die Erkundungsrichtung eindeutig weit von einzelnen Einrichtungen 5a, 5b, 5c entfernt ist.

Es können also relevante Einrichtungen 5a, 5b, 5c ausgewählt werden, für die ein Rückmeldungssignal ausgegeben wird. Beispielsweise führt der Fahrer 2 eine Erkundungsgeste aus, indem er mit den gestreckten Fingern einer Hand im Innenraum des Fahrzeugs 1 ungefähr zur Tür 5b hin zeigt. Je genauer die Erkundungsrichtung seiner Erkundungsgeste auf die Tür 5b gerichtet ist, desto heller leuchten die Lichtquellen 6.1 bis 6.8 der Beleuchtungseinrichtung 6b der Schiebetür 5b.

Überschreitet der Annäherungswert für eine Erkundungsgeste und eine bestimmte Einrichtung 5a, 5b, 5c einen bestimmten Schwellenwert, so wird die entsprechende Einrichtung 5a, 5b, 5c ausgewählt. Bei dem obigen Beispiel wird die Schiebetür 5b ausgewählt, wenn die Erkundungsgeste so ausgeführt wurde, dass die Erkundungsrichtung hinreichend genau in Richtung der Schiebetür 5b zeigt. Dabei kann in einem weiteren Ausführungsbeispiel als weitere Auswahlbedingung eine Zeitdauer definiert sein, wobei die Einrichtung ausgewählt werden kann, wenn der Fahrer 2 für die Dauer der definierten Zeit auf die Einrichtung 5a, 5b, 5c zeigt, das heißt, wenn der Annäherungswert den Schwellenwert für die definierte Zeitdauer übersteigt. Ferner kann eine Auswahlgeste definiert sein.

Es werden nun Bedienmöglichkeiten für die ausgewählte Einrichtung 5a, 5b, 5c erzeugt und ausgegeben, wobei die Bedienmöglichkeitenanzeige Informationen über Bedienmöglichkeiten für die ausgewählte Einrichtung 5a, 5b, 5c umfasst. In dem dargestellten Ausführungsbeispiel wird die Bedienmöglichkeitenanzeige durch die Beleuchtungseinrichtungen 6a, 6b, 6c der Einrichtungen 5a, 5b, 5c ausgegeben. Insbesondere wird dabei ausgegeben, in welche Richtung eine Bewegung als Bediengeste erfasst wird.

Diese Richtung wird in dem Ausführungsbeispiel durch einen Lauflichteffekt angezeigt, analog zu der oben mit Bezug zu Figur 2b erläuterten dynamischen Ansteuerung der Lichtquellen 6.1 bis 6.8 der Beleuchtungseinrichtung 6a. In dem Ausführungsbeispiel sind am oberen Rand der Schiebetür 5b des Fahrzeugs 1 Lichtquellen 6.1 bis 6.8 in einer Reihe angeordnet. Durch einen Lauflichteffekt von einer Position am linken Rand der Oberkante der Schiebetür 5b hin zum rechten Rand der Schiebetür 5b wird dem Nutzer signalisiert, dass er eine Bewegung nach rechts ausführen kann, die als Bediengeste erfasst und interpretiert wird. In dem Beispiel der Schiebetür 5b kann dem Nutzer etwa eine Möglichkeit zum Öffnen der Schiebetür 5b signalisiert werden. Umgekehrt kann durch einen Lauflichteffekt von rechts nach links signalisiert werden, dass eine Bewegung nach links als Bediengeste, etwa zum Schließen der Tür, definiert ist. Analog dazu kann bei einem weiteren Ausführungsbeispiel durch Lauflichteffekte der Beleuchtungseinrichtung 6a des Lautsprechers 5a signalisiert werden, dass Bewegungen sowohl nach rechts als auch nach links als Bediengesten erfasst werden können, wobei insbesondere Lautstärkeveränderungen in verschiedene Richtungen Bediengesten mit verschiedenen Richtungen entsprechen.

Dabei sind die möglichen Bediengesten nicht notwendigerweise auf die durch die Bedienmöglichkeitenanzeige angezeigten Bedienmöglichkeiten beschränkt, beispielsweise weil die Ausgabeeinheiten 6a, 6b, 6c lediglich eine beschränkte Anzeige der verschiedenen Bedienmöglichkeiten ermöglichen. In einem weiteren Ausführungsbeispiel wird alternativ oder zusätzlich eine Anzeigevorrichtung, etwa ein Bildschirm des Fahrzeugs 1, zur Ausgabe der Bedienmöglichkeiten genutzt. In diesem Fall können komplexe und zahlreiche Bedienmöglichkeiten ausgegeben werden.

Der Fahrer 2 führt nun eine Bediengeste aus, insbesondere eine solche Bediengeste, die durch die Bedienmöglichkeitenanzeige signalisiert wurde. Die Bediengeste wird durch die Gestenerfassungseinheit 4 erfasst und es wird durch die Steuereinheit 3 ein Steuersignal erzeugt, das an die ausgewählte Einrichtung 5a, 5b, 5c übertragen wird.

Die ausgewählte Einrichtung 5a, 5b, 5c führt anhand des Steuersignals eine Funktion aus, beispielsweise eine Lautstärkenveränderung durch den Lautsprecher 5a, oder ein Öffnen oder Schließen der Schiebetür 5b. In einem weiteren Ausführungsbeispiel wird während des Ausführens ein Funktionsrückmeldungssignal erzeugt und ausgegeben, das den Fahrer 2 darüber informiert, welche Funktion von welcher Einheit 5a, 5b, 5c des Fahrzeugs 1 ausgeführt wird. Das Funktionsrückmeldungssignal wird dabei insbesondere ausgegeben, solange das Ausführen der Funktion dauert, beispielsweise während des Öffnungsvorgangs der Schiebetür 5b oder während eines schrittweisen Verstellens der Lautstärke des Lautsprechers 5a. In anderen Ausführungsbeispielen kann das Funktionsrückmeldungssignal für eine definierte Zeitdauer ausgegeben werden.

In einem weiteren Ausführungsbeispiel wird ein Aktivierungssignal empfangen, wobei die Erzeugung des Aktivierungssignals nach an sich bekannten Verfahren erfolgen kann. Beispielsweise kann der Nutzer 2 einen Schalter bedienen, es kann eine Spracherkennung verwendet werden oder es kann eine Aktivierungsgeste erfasst und das Aktivierungssignal erzeugt werden. Anhand des Aktivierungssignals wird eine Gestenbedienung der Einrichtungen 5a, 5b, 5c aktiviert, das heißt, die Gestensteuerung der Einrichtungen 5a, 5b, 5c wird in einem dem erfindungsgemäßen Verfahren vorgelagerten Schritt aktiviert, beispielsweise um ein versehentliches Verstellen zu vermeiden.

Die Aktivierung kann ferner eine Teilmenge der Einrichtungen 5a, 5b, 5c des Fahrzeugs 1 betreffen, sodass beispielsweise einige Einrichtungen 5a, 5b, 5c dauerhaft durch Gesten bedient werden können, während andere Einrichtungen 5a, 5b, 5c lediglich dann durch Gesten gesteuert werden können, wenn diese Gestensteuerung aktiviert wurde. Beispielsweise kann das Aktivierungssignal auch automatisch erzeugt werden, etwa anhand einer Fahrsituation des Fahrzeugs 1. Beispielsweise kann das Öffnen der Schiebetür 5b des Fahrzeugs 1 für den Fall aktiviert werden, in dem das Fahrzeug 1 zum Stillstand kommt, und deaktiviert werden, wenn das Fahrzeug 1 sich in Bewegung befindet.

Bei einem weiteren Ausführungsbeispiel wird bei der Auswertung der Gesten des Fahrers 2, insbesondere bei der Auswertung der Bediengeste, berücksichtigt, mit welcher Geschwindigkeit die Geste ausgeführt wurde. Beispielsweise kann, wenn durch die Bediengeste ein Einstellungsparameter verändert wird, die Einstellung umso stärker verändert werden, je schneller die Bediengeste ausgeführt wurde. Ferner kann bei einer höheren Geschwindigkeit, mit der die Erkundungsgeste ausgeführt wird, der Schwellenwert für den Annäherungswert verändert werden, sodass beispielsweise bei besonders schnellem Ausführen der Erkundungsgeste ein weniger genaues Zeigen auf die auszuwählende Einrichtung 5a, 5b, 5c des Fahrzeugs 1 erforderlich ist, um die Einrichtung 5a, 5b, 5c auszuwählen.

### Bezugszeichenliste

1 Fahrzeug
2 Fahrer
2a Erfassungsraum
3 Steuereinheit
4 Gestenerfassungseinheit
5a Lautsprecher
5b Schiebetür
5c Kofferraumklappe
6a, 6b, 6c Ausgabeeinheit, Beleuchtungseinrichtung
6.1, 6.2, 6.3, 6.4, 6.5, 6.6, 6.7, 6.8 Lichtquellen
7 Leuchtende Lichtquelle

## Patentansprüche

1. Verfahren zum Bereitstellen einer Benutzerschnittstelle für zumindest eine Einrichtung (5a, 5b, 5c) eines Fahrzeugs (1), wobei der Einrichtung (5a, 5b, 5c) ein Ort zugeordnet ist, bei dem
(a) eine Erkundungsgeste eines Nutzers (2) erfasst wird, wobei der Erkundungsgeste eine Erkundungsrichtung zugeordnet wird und anhand der Erkundungsrichtung ein Annäherungswert für die Einrichtung (5a, 5b, 5c) bestimmt wird, wobei der Annäherungswert quantifiziert, wie genau der Nutzer auf den der Einrichtung (5a, 5b, 5c) zugeordneten Ort zeigt,
(b) anhand des Annäherungswertes ein Rückmeldungssignal erzeugt und ausgegeben wird,
(c) wenn der Annäherungswert einen bestimmten Schwellenwert übersteigt, die Einrichtung (5a, 5b, 5c) ausgewählt wird,
(d) eine Bedienmöglichkeitenanzeige für die ausgewählte Einrichtung (5a, 5b, 5c) erzeugt und ausgegeben wird, wobei die Bedienmöglichkeitenanzeige Informationen über Bedienmöglichkeiten für die ausgewählte Einrichtung (5a, 5b, 5c) umfasst,
(e) eine Bediengeste des Nutzers (2) erfasst wird und
(f) anhand der erfassten Bediengeste ein Steuersignal für die ausgewählte Einrichtung (5a, 5b, 5c) erzeugt und an die Einrichtung (5a, 5b, 5c) übertragen wird,
(g) das Rückmeldungssignal und/oder die Bedienmöglichkeitenanzeige so ausgegeben wird, dass ein räumlicher Bezug zu der Einrichtung (5a, 5b, 5c) hergestellt wird.

2. Verfahren gemäß einem der vorhergehenden Ansprüche,
**dadurch gekennzeichnet, dass**
das Rückmeldungssignal eine Lichtverteilung, insbesondere ein Lauflicht, umfasst.

3. Verfahren gemäß Anspruch 2,
**dadurch gekennzeichnet, dass**
die Lichtverteilung des Rückmeldungssignals einen Lichtparameter, insbesondere eine Farbe, eine Intensität und/oder eine dynamische Änderung, umfasst, wobei der Lichtparameter in Abhängigkeit von dem Annäherungswert gebildet wird.

4. Verfahren gemäß Anspruch 2 oder 3,
**dadurch gekennzeichnet, dass**
die Bedienmöglichkeitenanzeige eine dynamische Lichtverteilung, insbesondere ein Lauflicht, umfasst und durch die dynamische Lichtverteilung zumindest eine Raumrichtung dargestellt wird;

5. Verfahren gemäß einem der vorhergehenden Ansprüche,
**dadurch gekennzeichnet, dass**
die Bedienmöglichkeitenanzeige ein Graphikelement umfasst.

6. Verfahren gemäß einem der vorhergehenden Ansprüche,
**dadurch gekennzeichnet, dass**
durch die ausgewählte Einrichtung (5a, 5b, 5c) anhand des Steuersignals eine Funktion ausgeführt wird, wobei während des Ausführens der Funktion ein Funktionsrückmeldungssignal erzeugt und ausgegeben wird.

7. Verfahren gemäß einem der vorhergehenden Ansprüche,
**dadurch gekennzeichnet, dass**
ein Aktivierungssignal empfangen wird und anhand des Aktivierungssignals eine Gestenbedienung einer Einrichtung (5a, 5b, 5c) aktiviert wird.

8. Verfahren gemäß einem der vorhergehenden Ansprüche,
**dadurch gekennzeichnet, dass**
die Erkundungsgeste und/oder die Bediengeste des Nutzers (2) in einem Erfassungsraum (2a) erfasst wird, wobei der Erfassungsraum (2a) die unmittelbare Umgebung des Nutzers (2) auf einem Fahrzeugsitz des Fahrzeugs (1) umfasst.

9. Verfahren gemäß einem der vorhergehenden Ansprüche,
**dadurch gekennzeichnet, dass**
durch das Steuersignal eine Fahrzeugtür (5b, 5c) betätigt oder eine Klimaanlage des Fahrzeugs (1) eingestellt wird.

10. Verfahren gemäß einem der vorhergehenden Ansprüche,
**dadurch gekennzeichnet, dass**
die Einrichtung eine Audiowiedergabeeinrichtung (5a) umfasst und die Bedienmöglichkeiten Bediengesten umfassen, die entgegengesetzte Richtungen aufweisen, wobei eine Lautstärke der Audiowiedergabeeinrichtung (5a) durch das erzeugte Steuersignal gesteuert wird.

11. Verfahren gemäß einem der vorhergehenden Ansprüche,
**dadurch gekennzeichnet, dass**
die Bediengeste eine Geschwindigkeit aufweist und das Steuersignal in Abhängigkeit von der Geschwindigkeit der Bediengeste erzeugt wird.

12. System zum Bereitstellen einer Benutzerschnittstelle für zumindest eine Einrichtung (5a, 5b, 5c) eines Fahrzeugs (1), wobei der Einrichtung (5a, 5b, 5c) ein Ort zugeordnet ist, mit
einer Gestenerfassungseinheit (4), durch die eine Erkundungsgeste eines Nutzers (2) erfassbar ist, wobei der Erkundungsgeste eine Erkundungsrichtung zuordenbar ist und anhand der Erkundungsrichtung ein Annäherungswert für die Einrichtung (5a, 5b, 5c) bestimmbar ist, wobei der Annäherungswert quantifiziert, wie genau der Nutzer auf den der Einrichtung (5a, 5b, 5c) zugeordneten Ort zeigt,
einer Steuereinheit (3), durch die anhand des Annäherungswertes ein Rückmeldungssignal erzeugbar ist, und
einer Ausgabeeinheit (6a, 6b, 6c), durch die das Rückmeldesignal ausgebbar ist, wobei,
wenn der Annäherungswert einen bestimmten Schwellenwert übersteigt, durch die Steuereinheit (3) die Einrichtung (5a, 5b, 5c) auswählbar ist und eine Bedienmöglichkeitenanzeige für die ausgewählte Einrichtung (5a, 5b, 5c) erzeugbar und durch die Ausgabeeinheit (6a, 6b, 6c) ausgebbar ist, wobei
die Bedienmöglichkeitenanzeige Informationen über Bedienmöglichkeiten für die ausgewählte Einrichtung (5a, 5b, 5c) umfasst, wobei
durch die Gestenerfassungseinheit (4) ferner eine Bediengeste des Nutzers (2) erfassbar ist, wobei
durch die Steuereinheit (3) anhand der erfassten Bediengeste ein Steuersignal für die ausgewählte Einrichtung (5a, 5b, 5c) erzeugbar und an die Einrichtung (5a, 5b, 5c) übertragbar ist, und
das Rückmeldungssignal und/oder die Bedienmöglichkeitenanzeige so ausgegeben wird, dass ein räumlicher Bezug zu der Einrichtung (5a, 5b, 5c) hergestellt wird.

13. System gemäß Anspruch 12,
**dadurch gekennzeichnet, dass**
die Ausgabeeinheit (6a, 6b, 6c) zumindest eine längliche Beleuchtungseinrichtung (6a, 6b, 6c) umfasst, die sich von einer ersten Position zu einer zweiten Position erstreckt, und
das Rückmeldungssignal und/oder die Bedienmöglichkeitenanzeige einen dynamischen Lichteffekt umfasst, der dadurch erzeugbar ist, dass ein Beleuchtungsparameter entlang der länglichen Beleuchtungseinrichtung (6a, 6b, 6c) ausgehend von der ersten Position hin zu der zweiten Position verändert wird.

14. System gemäß Anspruch 12 oder 13,
**dadurch gekennzeichnet, dass**
die Einrichtung (5a, 5b, 5c) eine Schiebetür (5b), eine Klimaanlage, einen Bildschirm oder eine Audiowiedergabeeinrichtung (5a) des Fahrzeugs (1) umfasst.

## Claims

1. Method for providing a user interface for at least one device (5a, 5b, 5c) of a vehicle (1), wherein the device (5a, 5b, 5c) is assigned a location, in which
(a) an exploration gesture by a user (2) is captured, wherein an exploration direction is assigned to the exploration gesture and an approximation value is determined for the device (5a, 5b, 5c) on the basis of the exploration direction, wherein the approximation value quantifies the precision with which the user points at the location assigned to the device (5a, 5b, 5c),
(b) an acknowledgement signal is generated and output on the basis of the approximation value,
(c) when the approximation value exceeds a specific threshold value, the device (5a, 5b, 5c) is selected,
(d) an operating possibility display for the selected device (5a, 5b, 5c) is generated and output, wherein the operating possibility display includes information relating to possible operations for the selected device (5a, 5b, 5c),
(e) an operating gesture by the user (2) is captured, and
(f) based on the captured operating gesture, a control signal for the selected device (5a, 5b, 5c) is generated and transmitted to the device (5a, 5b, 5c),
(g) the acknowledgement signal and/or the operating possibility display are/is output such that a spatial reference to the device (5a, 5b, 5c) is established.

2. Method according to the preceding claim, **characterized in that**
the acknowledgement signal includes a light distribution, in particular a chase.

3. Method according to Claim 2,
**characterized in that**
the light distribution of the acknowledgement signal includes a light parameter, in particular a colour, an intensity and/or a dynamic change, wherein the light parameter is formed in dependence on the approximation value.

4. Method according to claim 2 or 3,
**characterized in that**
the operating possibility display includes a dynamic light distribution, in particular a chase, and at least one spatial direction is presented by the dynamic light distribution.

5. Method according to one of the preceding claims, **characterized in that**
the operating possibility display includes a graphical element.

6. Method according to one of the preceding claims, **characterized in that**
a function is performed by the selected device (5a, 5b, 5c) on the basis of the control signal, wherein a function acknowledgement signal is generated and output while the function is being performed.

7. Method according to one of the preceding claims, **characterized in that**
an activation signal is received, and operation of a device (5a, 5b, 5c) by gesture is activated on the basis of the activation signal.

8. Method according to one of the preceding claims, **characterized in that**
the exploration gesture and/or the operating gesture by the user (2) is captured in a capturing space (2a), wherein the capturing space (2a) includes the immediate surroundings of the user (2) in a vehicle seat of the vehicle (1).

9. Method according to one of the preceding claims, **characterized in that**
a vehicle door (5b, 5c) is actuated or an air conditioner of the vehicle (1) is adjusted by the control signal.

10. Method according to one of the preceding claims, **characterized in that**
the device comprises an audio playback device (5a), and the operating possibilities include operating gestures in opposite directions, wherein a volume of the audio playback device (5a) is controlled by the generated control signal.

11. Method according to one of the preceding claims, **characterized in that**
the operating gesture has a speed, and the control signal is generated in dependence on the speed of the operating gesture.

12. System for providing a user interface for at least one device (5a, 5b, 5c) of a vehicle (1), wherein the device (5a, 5b, 5c) is assigned a location, with a gesture capturing unit (4), by which an exploration gesture by a user (2) is capturable, wherein an exploration direction is assignable to the exploration gesture and an approximation value is determinable for the device (5a, 5b, 5c) based on the exploration direction, wherein the approximation value quantifies the precision with which the user points at the location assigned to the device (5a, 5b, 5c),
a control unit (3), by which an acknowledgement signal is able to be generated on the basis of the approximation value, and
an output unit (6a, 6b, 6c), by which the acknowledgement signal is able to be output, wherein,
when the approximation value exceeds a specific threshold value, the device (5a, 5b, 5c) is able to be selected by the control unit (3), and an operating possibility display for the selected device (5a, 5b, 5c) is able to be generated and output by the output unit (6a, 6b, 6c), wherein
the operating possibility display includes information relating to possible operations for the selected device (5a, 5b, 5c), wherein
a control gesture by the user (2) is furthermore capturable by the gesture capturing unit (4), wherein, based on the captured operating gesture, a control signal for the selected device (5a, 5b, 5c) is able to be generated and transmitted to the device (5a, 5b, 5c) by the control unit (3), and
the acknowledgement signal and/or the operating possibility display are/is output such that a spatial reference to the device (5a, 5b, 5c) is established.

13. System according to Claim 12,
**characterized in that**
the output unit (6a, 6b, 6c) comprises at least one elongate illumination device (6a, 6b, 6c), which extends from a first position to a second position, and
the acknowledgement signal and/or the operating possibility display include(s) a dynamic light effect that is able to be generated **in that** an illumination parameter is modified along the elongate illumination device (6a, 6b, 6c) starting from the first position to the second position.

14. System according to Claim 12 or 13,
**characterized in that**
the device (5a, 5b, 5c) comprises a sliding door (5b), an air conditioner, a screen or an audio playback device (5a) of the vehicle (1).

## Revendications

1. Procédé de fourniture d'une interface utilisateur pour au moins un équipement (5a, 5b, 5c) d'un véhicule (1), l'équipement (5a, 5b, 5c) étant associé à un emplacement, dans lequel
(a) un geste d'exploration d'un utilisateur (2) est détecté, le geste d'exploration étant associé à une direction d'exploration, et une valeur approximative pour l'équipement (5a, 5b, 5c) étant déterminée à l'aide de la direction d'exploration, la valeur approximative quantifiant avec quelle précision l'utilisateur désigne l'emplacement associé à l'équipement (5a, 5b, 5c),
(b) un signal de rétroaction est généré et délivré à l'aide de la valeur approximative,
(c) l'équipement (5a, 5b, 5c) est sélectionné si la valeur approximative dépasse une certaine valeur seuil,
(d) un affichage des options de commande pour l'équipement sélectionné (5a, 5b, 5c) est généré et délivré, l'affichage des options de commande comprenant des informations concernant les options de commande pour l'équipement sélectionné (5a, 5b, 5c),
(e) un geste de commande de l'utilisateur (2) est détecté, et
(f) un signal de commande pour l'équipement sélectionné (5a, 5b, 5c) est généré à l'aide du geste de commande détecté et est transmis à l'équipement (5a, 5b, 5c),
(g) le signal de rétroaction et/ou l'affichage des options de commande sont délivrés de façon à établir une relation spatiale avec l'équipement (5a, 5b, 5c).

2. Procédé selon l'une quelconque des revendications précédentes, **caractérisé en ce que** le signal de rétroaction comprend une distribution de lumière, en particulier un chenillard.

3. Procédé selon la revendication 2, **caractérisé en ce que** la distribution de lumière du signal de rétroaction comprend un paramètre de lumière, en particulier une couleur, une intensité et/ou un changement dynamique, le paramètre de lumière étant formé en fonction de la valeur approximative.

4. Procédé selon la revendication 2 ou 3, **caractérisé en ce que** l'affichage des options de commande comprend une distribution de lumière dynamique, en particulier un chenillard, et la distribution de lumière dynamique représente au moins une direction spatiale.

5. Procédé selon l'une quelconque des revendications précédentes, **caractérisé en ce que** l'affichage des options de commande comprend un élément graphique.

6. Procédé selon l'une quelconque des revendications précédentes, **caractérisé en ce que** l'équipement sélectionné (5a, 5b, 5c) effectue une fonction à l'aide du signal de commande, dans lequel, pendant l'exécution de la fonction, un signal de rétroaction de fonction est généré et délivré.

7. Procédé selon l'une quelconque des revendications précédentes, **caractérisé en ce qu'**un signal d'activation est reçu, et une commande par geste d'un équipement (5a, 5b, 5c) est activée à l'aide du signal d'activation.

8. Procédé selon l'une quelconque des revendications précédentes, **caractérisé en ce que** le geste d'exploration et/ou le geste de commande de l'utilisateur (2) est/sont détecté(s) dans un espace de détection (2a), l'espace de détection (2a) comprenant l'environnement immédiat de l'utilisateur (2) sur un siège de véhicule du véhicule (1).

9. Procédé selon l'une quelconque des revendications précédentes, **caractérisé en ce que** le signal de commande actionne une portière de véhicule (5b, 5c) ou règle un système de climatisation du véhicule (1).

10. Procédé selon l'une quelconque des revendications précédentes, **caractérisé en ce que** l'équipement comprend un équipement de lecture audio (5a), et les options de commande comprennent des gestes de commande qui présentent des directions opposées, un volume de l'équipement de lecture audio (5a) étant commandé par le signal de commande généré.

11. Procédé selon l'une quelconque des revendications précédentes, **caractérisé en ce que** le geste de commande présente une vitesse, et le signal de commande est généré en fonction de la vitesse du geste de commande.

12. Système de fourniture d'une interface utilisateur pour au moins un équipement (5a, 5b, 5c) d'un véhicule (1), l'équipement (5a, 5b, 5c) étant associé à un emplacement, comprenant
une unité de détection de geste (4) qui permet de détecter un geste d'exploration d'un utilisateur (2), le geste d'exploration pouvant être associé à une direction d'exploration, et une valeur approximative pour l'équipement (5a, 5b, 5c) pouvant être déterminée à l'aide de la direction d'exploration, la valeur approximative quantifiant avec quelle précision l'utilisateur désigne l'emplacement associé à l'équipement (5a, 5b, 5c),
une unité de commande (3) permettant de générer un signal de rétroaction à l'aide de la valeur approximative, et
une unité de sortie (6a, 6b, 6c) qui permet de délivrer le signal de rétroaction, dans lequel
si la valeur approximative dépasse une certaine valeur seuil, l'unité de commande (3) permet de sélectionner l'équipement (5a, 5b, 5c), et un affichage des options de commande peut être généré pour l'équipement sélectionné (5a, 5b, 5c) et peut être délivré par l'unité de sortie (6a, 6b, 6c), dans lequel
l'affichage des options de commande comprend des informations concernant des options de commande pour l'équipement sélectionné (5a, 5b, 5c), dans lequel
l'unité de détection de geste (4) permet en outre de détecter un geste de commande de l'utilisateur (2), dans lequel
l'unité de commande (3) permet de générer, à l'aide du geste de commande détecté, un signal de commande pour l'équipement sélectionné (5a, 5b, 5c) et de le transmettre à l'équipement (5a, 5b, 5c), et
le signal de rétroaction et/ou l'affichage des options de commande est délivré de façon à établir une relation spatiale avec l'équipement (5a, 5b, 5c).

13. Système selon la revendication 12, **caractérisé en ce que**
l'unité de sortie (6a, 6b, 6c) comprend au moins un équipement d'éclairage allongé (6a, 6b, 6c) qui s'étend d'une première position à une deuxième position, et
le signal de rétroaction et/ou l'affichage des options de commande comprend/comprennent un effet lumineux dynamique qui peut être généré **en ce qu'**un paramètre d'éclairage est modifié le long de l'équipement d'éclairage allongé (6a, 6b, 6c) en partant de la première position jusqu'à la deuxième position.

14. Système selon la revendication 12 ou 13, **caractérisé en ce que** l'équipement (5a, 5b, 5c) comprend une porte coulissante (5b), un système de climatisation, un écran ou un équipement de lecture audio (5a) du véhicule (1).
